# EUROPEAN PATENT SPECIFICATION

(11) **EP 1 517 791 B1**
(45) Date of publication and mention of the grant of the patent: **19.05.2010**
(21) Application number: 03734146.8
(22) Date of filing: 22.05.2003
(51) Int. Cl.: B23B 7/04

(54) **OPTICAL STACK OF LAMINATED REMOVABLE LENSES**
OPTISCHER STAPEL VON LAMINIERTEN ENTFERNBAREN GLÄSERN
EMPILEMENT OPTIQUE DE LENTILLES AMOVIBLES EN VERRE FEUILLETE

(30) Priority: 24.06.2002 US 178140
(43) Date of publication of application: 30.03.2005
(73) Proprietor: Wilson, Bart, San Juan Capistrano, CA 92675 (US); Wilson, Seth, San Juan Capistrano, CA 92675 (US); Wilson, Stephen S., San Juan Capistrano, CA 92675 (US)
(72) Inventor: Wilson, Bart, San Juan Capistrano, CA 92675 (US); Wilson, Seth, San Juan Capistrano, CA 92675 (US); Wilson, Stephen S., San Juan Capistrano, CA 92675 (US)
(74) Representative: Gervasi, Gemma
(86) International application number: PCT/US2003/016284
(87) International publication number: WO 2004/000540

(56) References cited:
- WO-A-00/24576
- US-A- 2 511 329
- US-A- 4 716 601
- US-A- 6 085 358
- US-B1- 6 388 813
- US-B1- 6 461 709

## Description

### BACKGROUND OF THE INVENTION

The present application relates generally to guards and protectors, and more particularly, to a stack of removable lenses that can be adhered to a 11surface and removed one at a time when a new/clean surface is desired.

Face shields are employed in environments where contamination of the eyes may occur. It is well known in the art that flexible, transparent lenses affixed by numerous methods are overlaid on the face shield for protection. The lenses are easily removed and discarded when visibility is reduced from the accumulation of dirt or other contaminants. In motor sports, for instance, multiple layers of transparent lenses are overlaid on the face shield, each being sequentially removed as they become contaminated, because they reduce the visibility of the operator. The drawback of the lenses in the prior art is that each transparent lens applied over the face shield is itself a hindrance to good visibility due to its optical index of refraction. Most common plastic materials have optical indexes of refraction ranging from 1.47 to 1.498. The index mismatch between the removable lens and air (air has an optical index of 1.00) causes a reflection of 4% of the light that would normally come to the operator's eyes. This reflection effect is additive for each additional surface-to-air interface. Thus, for each removable lens having two surfaces, the reflections are 8%. A stack of seven lenses would reflect 42% of the light away from the operator thereby reducing the brightness of the objects viewed. A second optical phenomenon occurs simultaneously that also reduces visibility. The reflections are bi-directional and thus make the lens stack appear as a semi-permeable mirror to the operator. This mirror effect further reduces visibility because the light that passes through the lens stack reflects off of the operator's face and then reflects off of the lens stack into the operator's eyes. The effect to the operator is that he sees his own image on the inside of the stack nearly as brightly as the objects viewed on the outside. This significantly reduces visibility:

Another drawback to this stacking arrangement is that moisture exhaled by the operator's breath can cloud or fog up the lenses, also reducing visibility. The air space between each lens allows the moisture to enter this area.

The requirement of being able to see through a face shield is similar to that of being able to see through a vehicle window. The accumulation of dirt or other contaminants impairs the wearer's visibility through a face shield. In the case of a vehicle, dirt and other contaminants can be washed off. However, graffiti, whether applied (e.g., with paint) or scratched (e.g., with a carbide tip or etched with acid) can cause costly damage to vehicles, such as busses. This problem extends to the entire vehicle, not just the windshield or other windows. In the case of the windshield or mirrors, not only can the damage be costly, but it can impair the driver's visibility.

The examples discussed all share the common problem of having a surface that needs to be protected. A need exists for protecting such surfaces and for restoring them to a clean state.

The prior art discloses reflective lens stacks that do cause reflections to the operator's eyes. An example of this type of prior art of reflective lens stacks is disclosed in U.S. Patent No. 5,592,698 issued on Jan. 14, 1997 to Woods. The document US 6,388,813 discloses a stack of laminated transparent lenses with an integrated tab.

### BRIEF SUMMARY OF THE INVENTION

The present invention provides a set of items/an assembly according to claim 1.

Refraction is the change in the direction in which waves travel when they pass from one kind of matter into another. Waves are refracted (bent) when they pass at an angle from one medium into another in which the velocity of light is different. The amount that a ray of a certain wavelength bends in passing from one medium to another is indicated by the index of refraction between the two mediums for that wavelength. The index of refraction indicates the amount that a light ray bends as it passes out of one substance and into another. When light passes from air to a denser substance, such as Mylar film, it slows down. If the light ray enters the Mylar film at any angle except a right angle, the slowing down causes the light ray to bend or refract at the point of entry. The ratio of the speed of light in air to its speed in the Mylar film is the Mylar film's index of refraction.

The present invention includes a series of alternating optically clear films whose indexes of refraction are matched to within .2 and which will nearly eliminate all reflections to the operator's eyes. The layers of film are adhesively laminated to one another and are compliant so there is no air between the layers. The film layers can be large and generally rectangular in shape and may include a tab extending from each of the film layers. The tabs can be staggered so that the user can remove the top most layer and then the next layer. This embodiment of the present invention can be applied to race car windshields, windows, visors or direct view displays such as ATM machines that are subject to contaminating environments. Accordingly, the present invention is an adhesively laminated multi-layered clear film adapted to be used on a racer's face shield, or on the windshield of a race car to keep the viewing area clean during the course of a race.

Other embodiments of the present invention may include uses on a surface as a graffiti stop. The surface may be a vehicle, such as a bus. The lens stack may be applied to the vehicle body and/or to the vehicle windows, including the windshield. A removable tab can be affixed to the top layer of the lens stack for removing the top layer of film. Such shields should be resistant to scratching and etching, such as acid etching.

Other embodiments may include use of the stack of lenses on the display of a computing device, such as a hand held computing device.

Yet other embodiments may include use of the stack of lenses on a grocery display, such as a produce display.

The stack of lenses may be tinted. Such tinting is accomplished by tinting the bottom lens of the stack of lenses. The stack of lenses may also have a total or partial mirror effect. Such a mirror effect is achieved via a mineralized deposition on the bottom layer of film in the stack of lenses.

### BRIEF DESCRIPTION OF THE DRAWINGS

An illustrative and presently preferred embodiment of the present invention is shown in the accompanying drawings, in which:
Figure 1 is a perspective view of an off-road wearer's helmet showing a use of the present invention;
Figure 2. shows a prior art solution tab
Figure 3 is a top view of a detail of the invention illustrating seven layers of lens held together by an adhesive applied between each lens with the thicknesses of the layers of each lens and applied adhesive highly exaggerated to clearly show the relationship between the lenses and the adhesive and also to show the end portions that do not have any adhesive between each lens layer for forming the removable tab portions at both ends of the present invention;
Figure 4 illustrates a 60" wide roll of film, which will be used to cut out the optical stacks. The gray stripes illustrate the clear film with adhesive, and the clear stripes illustrate the clear film without adhesive. It is to be understood that the gray stripes are for illustration purposes only, because the adhesive is clear;
Figure 5 is in detail of the invention with an exploded perspective view illustrating seven sheets of film layer and seven layers of clear adhesive interposed between each sheet of film layer for use in embodiments where the film layers are mounted by wetting the last (bottom) adhesive layer directly to a windshield, a window, or the like;
Figure 6 showns use of the present invention illustrating a bus having the sheets of film layer and adhesive shown in Figure 5 attached thereto;
Figure 6A illustrates a cross section of the sheets of film layer and adhesive affixed to the bus as shown in Figure 6;
Figures 6B and 6C illustrate the sheets of film layer and adhesive shown in Figure 6A with a tab used for removing the top sheet of film layer;
Figure 6D illustrate a tab used for removal of the top sheet of film layer shown in Figures 6B-6C;
Figure 7 shows use of the present invention illustrating produce display case having the sheets of film layer and adhesive shown in Figure 5 attached thereto; and
Figure 8 shows use of the present invention illustrating a, hand-held computing device having the sheets of film layer and adhesive shown in Figure 5 attached thereto.

### DETAILED DESCRIPTION OF THE INVENTION

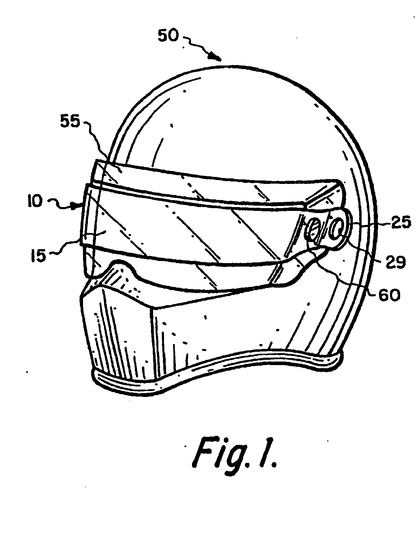

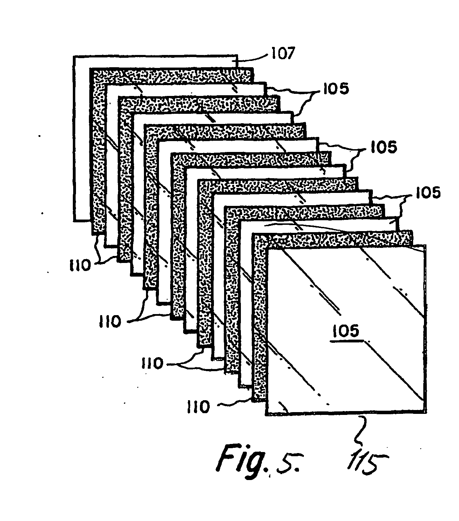

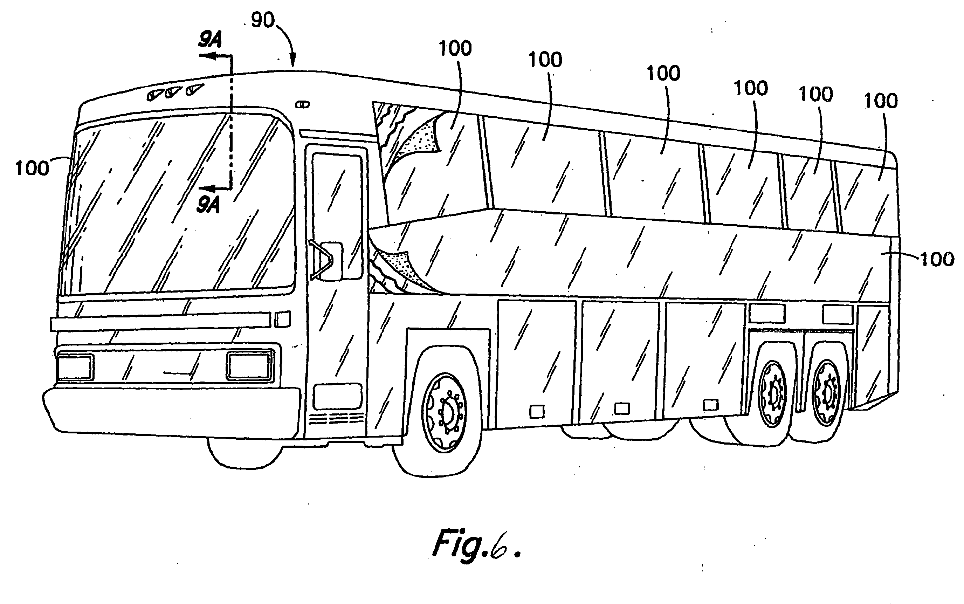

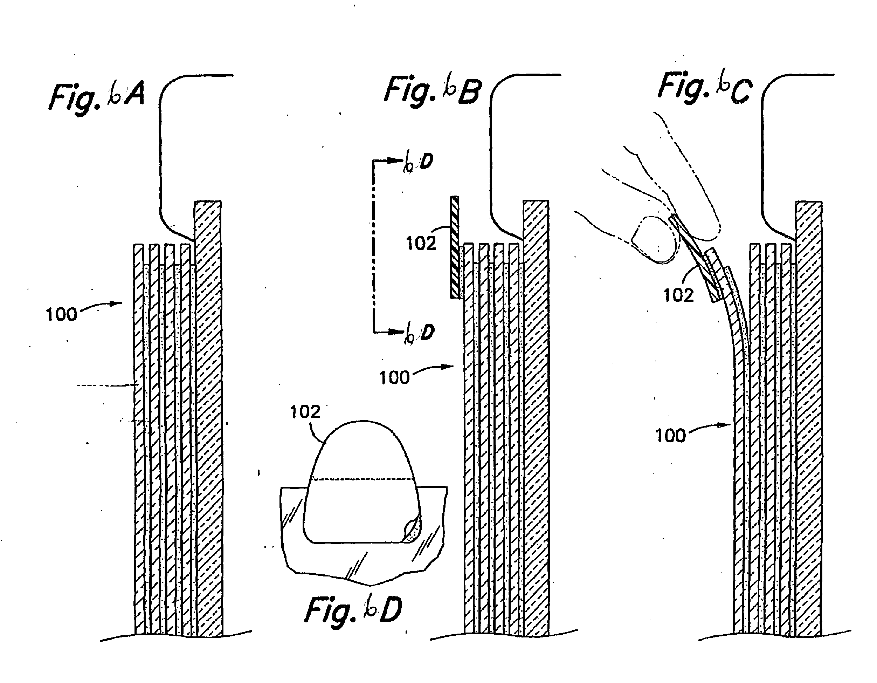

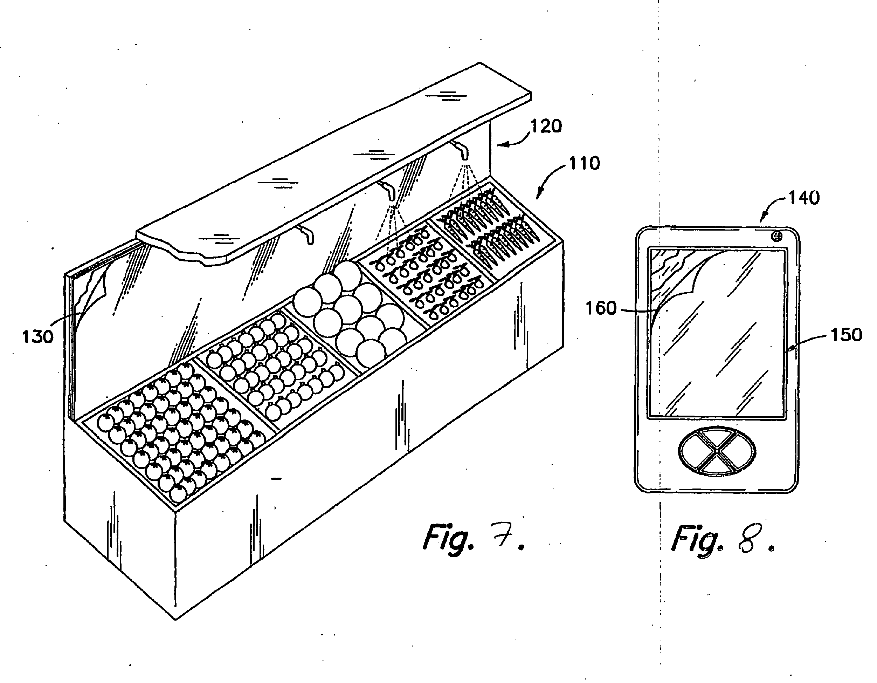

Referring now to the drawings wherein the showings are for purposes of illustrating preferred embodiments of the present invention only, and not for purposes of limiting the same, several embodiments are illustrated. A first example shown in Figures 1-3 illustrates a stack of laminated transparent lenses that can be affixed to a face shield on a helmet, Figure 5 illustrates an example where the stack of lenses are affixed to a windshield by wetting the bottom adhesive layer and mounting it directly on the windshield, Figure 6 illustrates an example where the stack of lenses is used as a graffiti stop (e.g., on a bus), Figure 7 illustrates an embodiment where the stack of lenses is used on a produce display and Figure 8 illustrates an embodiment where the stack of lenses is used on a hand-held (e.g., palm) computing device.

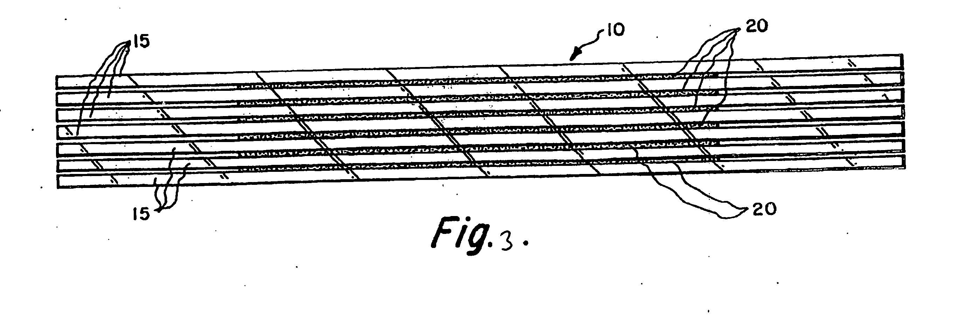

In the first example a use of the present invention is shown and described. The top view in Figure 3 illustrates adhesive layer 20, which includes seven layers of lenses 15 adhesively affixed to each successive lens.

The material used to form the lenses is preferably a clear polyester. The lens layers are fabricated from sheets of plastic film sold under the registered trademark Mylar owned by the DuPont Company. The several trademark registrations for the mark Mylar list several types of products sold under that mark, and include polyester film. The type of Mylar used in the present invention is made from the clear polymer polyethylene terephalate, commonly referred to as PET, which is the most important polyester. PET is thermoplastic - that is, it softens and melts at high temperatures. Uses of PET film include magnetic tapes and shrink wrap.

The adhesive 20 used to laminate the lenses together sequentially is a clear optical low tack material. The thickness of each lens ranges from 13µm (-5) mil to 178µm (71 mil, 1 mil is .001"). The preferred thickness is 51µm (2 mil). Even after the adhesive material is applied to a 2 mil thickness lens, the thickness of the 2 mil thickness lens will still be 2 mil because the adhesive has nominal thickness. As illustrated in Figure 3, after the seven layers of film and the six layers of adhesive are laminated together, the overall thickness of the end product is 381µm (15 mils).

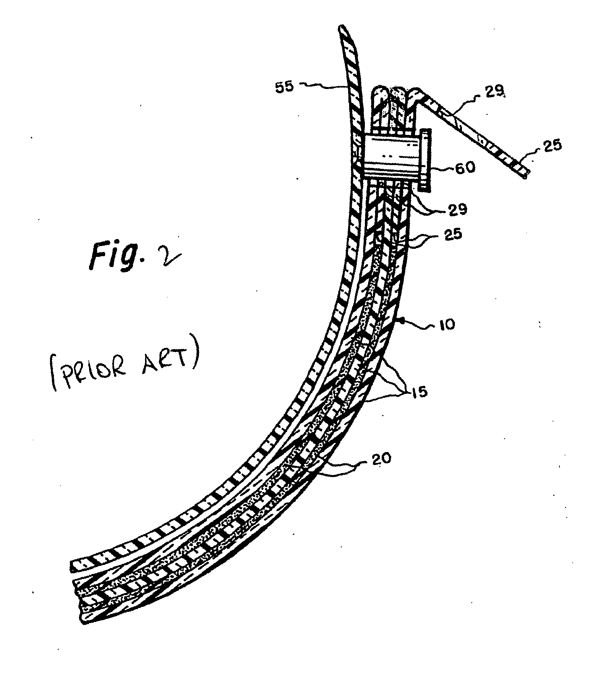

The term "wetting" can be used to describe the relationship between the laminated film layers. When viewing through the laminated layers, it appears to be one single piece of plastic film. Less than 2% reflections from the inner layers are evident. The end tab portions without the adhesive exhibit reflections, but do not affect the visibility of the user because these end portions are out of the field of view and folded back over the posts as illustrated in Figure 2.

The adhesive material 20 is a water-based acrylic optically clear adhesive or an oil based clear adhesive, with the water based adhesive being the preferred embodiment. After the seven layers are laminated or otherwise bonded together with the adhesive layers, the thickness of each adhesive layer is negligible even though the adhesive layers are illustrated in Figures 2 and 3 as distinct layers. Figure 3 is a top view of the stackable lenses illustrating seven layers of lenses held together by an adhesive applied between each lens with the thicknesses of the layers of lenses and applied adhesive highly exaggerated to clearly show the relationship between the lenses and the adhesive and also to show the end portions that do not have any adhesive between each lens layer for forming the removable tab portions 25 at both ends of the present invention.

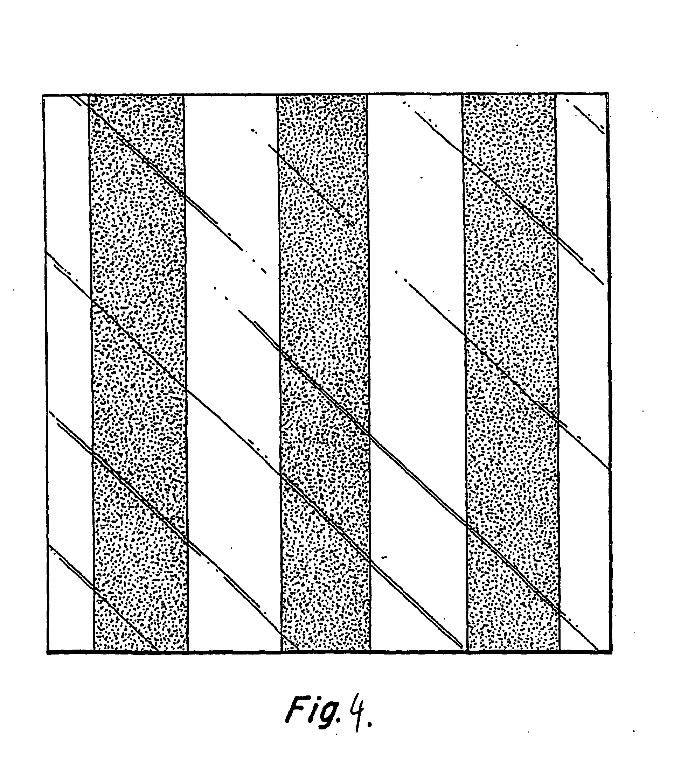

The individual stackable lens package, illustrated in Figure 3 for use with racing helmets, can be fabricated from a roll of film as illustrated in Figure 4. The film in Figure 4 includes seven layers of clear polyester film and has the water-based acrylic adhesive laminating the seven film layers to one another. Keep in mind that each layer of the lenses can be easily peeled away as the top layer exposing the next clean lens. Each succeeding lens layer can be removed as the top lens becomes contaminated with dirt and grime during racing conditions.

Referring back now to Figure 2. As previously stated, Figure 2 illustrates the tension post 60 extending outwardly from the face shield 55 with the left side end tab portion 25. The face shield 55 has a left tension post 60 and a right tension post 65. Preferably, the present example 10 has the following dimensions 46cm (18") in length; 6.4cm (2 ½") in height; and about 381 µm (15 mils) in thickness. The present invention is symmetrical about its vertical medial axis and about its horizontal medial axis. The left end has a removable tab portion 25, and the right end has a removable tab portion 35. The area 15 indicates where the adhesive 20 is applied to the layers of the lens 15. The bilateral demarcation lines 31 and 41 indicate the locations of the adhesive stops on either side. The demarcation lines 31 and 41 also indicate where the tab portions begin. The example has a pair of bilateral keyhole-shaped slots 27 and 37 for demountably engaging the two helmet posts 60 and 65 respectively. The curved distance between the two helmet posts 60 and 65 is the same as the distance between the centers of the pair of slots 27 and 37. The user secures the lenses to the face shield by positioning the slots adjacent the helmet posts and passing the posts through the slots. It is preferable that the remainder of the tab portion outboard from the slot be folded back upon itself so that the finger hole is also passed through the helmet post as illustrated in Figure 2. The proper installation of the present invention on the helmet requires the user to position the bottom lens of the stack through the post hole by passing the post through the slot, then folding back the remainder of the tab portion 25 so that the post passes through the finger hole 29. This is done for each lens working from the bottom up until the tab portion 25 of the top lens extends unfolded. In this manner, the helmet wearer can easily put his index finger through the finger hole of the topmost lens layer. The clean layer below the removed layer is then exposed and the removal tab portion on the exposed layer will spring back to the unfolded position to expose the finger hole so that the helmet wearer can easily remove that layer after it becomes soiled and contaminated. The plastic material forming the lenses is resilient and will spring back to its unfolded position and extend outwardly from the face shield. The thicknesses of the layered lenses and folded tab portions illustrated in Figure 3 are highly exaggerated to clearly show the folding relationship. In actual practice seven lenses and seven tab portions are stacked into the space between the end of the post and the outer surface of the face shield. Remember that there is no adhesive between the tab portions. This allows the removal tab portions to fan out. They do not stick to one another.

The present invention as shown in the Figures has removal tab portions at both ends. This allows a right-handed or left-handed person to easily remove the topmost layer. It also allows the driver to pull the tab with either hand depending on the circumstances of the race.

The windshield embodiment 100 illustrated in Figure 5 will now be discussed in detail. An optical stack of removable lenses for affixing to an optical window such as a racing car windshield. The embodiment 100 has a plurality of (e.g., seven) generally rectangular superposed removable lenses 105 adhesively affixed to one another. The outer perimeter is continuous. Each of the removable lenses 105 is held to each successive lens with a clear uninterrupted adhesive layer 110 interposed between each of the removable lenses. Preferably, but optionally, the perimeter has at least one generally straight edge portion 115.

It is to be understood that the invention could be practiced with only one generally straight edge portion, or even with no straight edges (e.g., circular or elliptical). The area adjacent to the straight edge portion 115 has a banded portion 120 that does not have any adhesive affixed to any of the layers of film to assist in allowing each said film layer 105 to be peeled off successively along the straight edge portion.

The adhesive layer can be foreshortened so as to expose successively a portion of the lens layers without optical wetting to create a grasping tab.

The stack of removable lenses as illustrated in Figure 5 can have an optically clear adhesive as the bottom last layer to aid in mounting the stack of lenses to the windshield. A temporary removable cover 107 may be adhered to the bottom layer of adhesive to protect the wetting adhesive 110 until installation. The stack is affixed to the windshield in much the same way that tinted window plastic film is affixed to a window. The windshield is sprayed with water and the bottom adhesive layer with the stack is then applied to the windshield. Air bubbles and the like are eliminated with a squeegee appliance. The bottom layer becomes "wetted" to the windshield.

The bottommost layer of film may be tinted, if desired. Such tinting is similar to the tinting of plastic window film. The tinting can be any one of a variety of colors, e.g., amber, gray, etc. The bottom layer may also include a metalized deposit to produce either a partial or total mirror effect.

The stack of removable lenses 100 can be applied to any type of optical window such as a windshield, a window, a face shield, or a video display. It is common at an ATM terminal to have a video display for the customer. The surface of the display can be kept clear by using the present invention.

The present invention may also be used as a graffiti stop to prevent damage to a surface caused by graffiti (e.g., a vehicle or a sign). For example, graffiti may be written on a vehicle body and/or vehicle windows. The graffiti may be applied, for example using paint or it may be scratched on, for example using a carbide tip or acid. It is very costly to repair property, such as a sign or a vehicle, after such vandalism. The stack of removable lenses 100 of the present invention can be used as a graffiti stop, for example on vehicles such as busses 90. As shown in Figure 6, a stack of removable lenses (such as those shown in Figure 5) can be applied to windows and/or the body of a vehicle, such as a bus 90.

The Mylar material used in the present invention is inert to acid. It also is scratch resistant, including scratching done with a carbide tip. Thus, the layers of lenses of the present invention 100 such as those shown in Figure 5 can be adhered to a vehicle body and/or vehicle window. If graffiti is applied or etched into the surface, the affected layer is simply removed.

Preferably, the adhesive will cover the entire bottom surface of the bottom layer that is attached to the surface, e.g., the vehicle. Successive layers may have a portion, for example a strip, that does not have adhesive applied to the surface. The uppermost layer can easily be removed by grabbing the portion of the lens that does not have adhesive and removing the uppermost layer.

Figures 6A-6D illustrate removal of the top sheet of a stack of non-self evident layers of film. Figure 6A illustrates a cross section of a stack of lenses 100 shown in Figure. 6. A tab 102, such as the one shown in Figure 6D, can be affixed to the top sheet when removal of the top sheet is desired. The tab 102 includes an adhesive that is strong enough to adhere to the top layer. When the tab is pulled only the top layer of film is removed from the stack of film lenses 100 as shown in Figure 6C.

The present invention has a multitude of uses where a clean surface is desired in a short period of time. As described above, uses include those where the surface is exposed to large amounts of dirt or debris in a short period of time, such as motorcycle or automobile racing, or instances where surfaces are purposely damaged by vandalism, such as graffiti. It will also be appreciated that the present invention can be used for more conventional uses where normal use causes above average dust or debris on a surface such that a System for providing a clean surface quickly and easily is desired. A couple of examples of other uses for the present invention are described next.

The present invention may also be used on merchandizing displays. One such merchandizing display is a grocery display 110, for example, a produce display, such as the one shown in Figure 7. Such displays typically include a reflective surface area 120 behind the produce so that there appears to be more produce on the display. The produce in such display cases are frequently watered. Such frequent watering tends to spot the reflective surface. As shown in Figure 7; the present invention 130 can be placed on the reflective surface 120. Thus, when the reflective surface becomes significantly water spotted, the top layer of the present invention 130 can be removed revealing a clean reflective surface.

The reflective surface shown in Figure 7 can be obtained by placing clear layers over a display having a reflective surface. Alternatively, if the display does not have a reflective surface, a stack of layers with the bottommost layer having a reflective surface created by a metalized deposit can be used.

Another embodiment of the present invention is for use on computing displays. For example, the present invention may be used on hand held computing devices, such as personal digital assistants, as shown in Figure 8. Use of protective film layers on display screens helps protect the screen from scratches, as well as reducing the glare on the screen. The stack of removable lenses 160 is placed on the display area 150 of the computing device 140. When the top lens becomes dirty, for example by having excessive fingerprints or scratches, the topmost layer can be removed. Preferably, the lenses do not include tabs. A removable tab such as that shown in Figure 6D can be affixed to the top layer in order to remove it.

## Claims

1. A set of items consisting of a stack of laminated removable lenses (10) for affixing to a surface of an object and a tab (102), wherein the stack of removable lenses comprises:
- a plurality of superposed removable optical clear films (15) adhesively affixed to one another;
- each said removable optical clear film (15) being held to each successive optical clear film with a clear uninterrupted adhesive layer (20) interposed between each said removable optical clear film, each said removable optical clear film (15) consists of a single film layer and an adhesive layer, the films having indexes of refraction matched to within 2,
**characterized in that**
the tab (102) is affixable to a top film when removal of the top film is desired wherein the tab includes an adhesive that is strong enough to adhere to the top film whereby upon pulling the tab (102) only the top film is removed from the stack of removable lenses (100).

2. The set of items as recited in Claim 1 wherein the stack of removable lenses includes a bottom film and an adhesive layer on the bottom film which in use directly affixes the stack of removable lens, preferably further comprising a removable sheet cover (107) affixed to the adhesive layer (110) on the bottom film to protect the adhesive layer.

3. The set of items as recited in Claim 1 wherein the removable optical clear films (15) are generally rectangular; preferably the removable films form a continuous perimeter having an edge (115); more preferably an area adjacent the edge and the tab has a banded portion that does not have any adhesive affixed to any of the layers of film to assist in allowing the film layer to be peeled off with the tab.

4. The set of items as recited in Claim 1 wherein
- said optical clear removable films (15) and said clear adhesive layers (20) have an index of refraction between 1.40 and 1.52; or
- said removable optical clear films (15) are made of a clear polyester;

5. The set of items as recited in Claim 1 wherein said removable optical clear films (15) are made of a scratch resistant material; preferably said removable films are made of a material that is inert to acid.

6. Use of the set of items as recited in Claim 1 on a surface of a vehicle (90); preferably on a window on the vehicle, or on a body of the vehicle.

7. Use of the set of items as recited in Claim 1 on a surface of a display screen; preferably the display screen is a display screen for a computing device (140), more preferably the display screen is a display screen for a handheld computing device.

8. Use of the set of items as recited in Claim 1 on a surface of a merchandizing display.

9. The set of items as recited in Claim 1 wherein the adhesive covers an entire surface of the removable optical clear film (15).

10. The set of items as recited in Claim 1 wherein the bottom film is tinted or affixable to the surface of the object and the bottom film is reflective.

## Patentansprüche

1. Satz von Posten, bestehend aus einer zum Anbringen auf der Oberfläche eines Gegenstandes bestimmten Schichtanordnung von abziehbaren geschichteten Masken (10) mit einer Lasche (102), wobei diese Schichtanordnung von abziehbaren Masken umfasst:
- eine gewisse Anzahl von übereinander befindlichen abziehbaren optischen Klarfolien (15), welche klebend aneinander befestigt sind,
- wobei jede genannte abziehbare optische Klarfolie (15) an jeder nachfolgenden optischen Klarfolie mit einer durchgehenden klaren Kleberschicht (20) gehalten wird, die sich zwischen jeder genannten abziehbaren optischen Klarfolie befindet, wobei jede genannte abziehbare optischer Klarfolie (15) aus einer einzelnen Folienschicht und einer Kleberschicht besteht, wobei diese Folien Brechungsindices aufweisen, die so aufeinander abgestimmt sind, dass sie sich um nicht mehr als 0,2 unterscheiden,
**dadurch gekennzeichnet, dass**
die Lasche (102) an der obersten Folie anbringbar ist, wenn das Abziehen der obersten Folie gewünscht wird, wobei die Lasche einen Kleber enthält, welcher ausreichende Klebkraft aufweist, um an der obersten Folie zu haften, wodurch beim Ziehen an der Lasche (102) nur die oberste Folie von der Schichtanordnung von abziehbaren Masken (100) abgelöst wird.

2. Satz von Posten nach Anspruch 1, bei welchem die Schichtanordnung von abziehbaren Masken eine unterste Folie und eine Kleberschicht auf der untersten Folie enthält, mit welcher beim Gebrauch die Schichtanordnung von abziehbaren Masken auf direkte Weise befestigt wird, wobei diese vorzugsweise zusätzlich ein abziehbares Deckblatt (107) umfasst, welches an der Kleberschicht (110) auf der untersten Folie angebracht ist, um die Kleberschicht zu schützen.

3. Satz von Posten nach Anspruch 1, bei welchem die abziehbaren optischen Klarfolien (15) im Allgemeinen rechteckförmig sind, wobei vorzugsweise die abziehbaren Folien einen durchgehenden Umfang bilden, der eine Kante (115) aufweist, wobei stärker vorzuziehen ist, dass ein an die Kante und die Lasche angrenzender Bereich einen bandförmigen Abschnitt aufweist, welcher keinerlei an irgend einer der Schichten aus Folie anhaftenden Kleber trägt, damit unterstützt wird, dass man die Filmschicht mit Hilfe der Lasche ablösen kann.

4. Satz von Posten nach Anspruch 1, bei welchem
- die genannten abziehbaren optischen Klarfolien (15) und die genannten durchsichtigen Kleberschichten (20) einen Brechungsindex zwischen 1,40 und 1,52 aufweisen oder
- die genannten abziehbaren optischen Klarfolien (15) aus einem durchsichtigen Polyester gefertigt sind.

5. Satz von Posten nach Anspruch 1, bei welchem die genannten abziehbaren optischen Klarfolien (15) aus einem kratzfesten Material gefertigt sind, wobei vorzugsweise die genannten abziehbaren Folien aus einem Material gefertigt sind, welches säurebeständig ist.

6. Einsatz des Satzes von Posten nach Anspruch 1 auf einer Oberfläche eines Fahrzeugs (90), vorzugsweise auf einem Fenster am Fahrzeug oder auf der Karosserie des Fahrzeugs.

7. Einsatz des Satzes von Posten nach Anspruch 1 auf der Oberfläche eines Anzeigeschirmes, wobei vorzugsweise dieser Anzeigeschirm ein Anzeigeschirm für eine Rechenanlage (140) ist, wobei stärker vorzuziehen ist, dass der Anzeigeschirm ein Anzeigeschirm für einen Taschenrechner ist.

8. Einsatz des Satzes von Posten nach Anspruch 1 auf der Oberfläche einer Warenauslage.

9. Satz von Posten nach Anspruch 1, bei welchem der Kleber die gesamte Oberfläche der abziehbaren optischen Klarfolie (15) bedeckt.

10. Satz von Posten nach Anspruch 1, bei welchem die unterste Folie getönt ist oder an die Oberfläche des Gegenstandes anbringbar ist und die unterste Folie reflektierend ist.

## Revendications

1. Ensemble d'articles consistant en une pile de lentilles (10) amovibles stratifiées destiné à être apposé à une surface d'un objet et une languette (102), dans lequel la pile de lentilles amovibles comprend :
- une pluralité de films optiques (15) transparents amovibles superposés et collés les uns aux autres ;
- chaque dit film optique (15) transparent amovible étant maintenu sur chaque film optique transparent successif par une couche adhésive (20) transparente ininterrompue interposée entre chacun desdits films optiques transparents amovibles, chaque dit film optique (15) transparent amovible consistant en une couche de film unique et une couche adhésive, les films ayant des indices de réfraction qui correspondent avec une tolérance de 0,2,
**caractérisé en ce que**
la languette (102) peut être apposée à un film supérieur lorsque le retrait du film supérieur est souhaité, dans lequel la languette comprend un adhésif qui est suffisamment fort pour adhérer au film supérieur, moyennant quoi, lorsque la languette (102) est tirée, seul le film supérieur est retiré de la pile de lentilles (100) amovibles.

2. Ensemble d'articles selon la revendication 1, dans lequel la pile de lentilles amovibles comprend un film inférieur et une couche adhésive sur le film inférieur qui, en utilisation, appose directement la pile de lentilles amovibles, comprenant en outre, de préférence, une feuille de recouvrement (107) amovible apposée à la couche adhésive (110) sur le film inférieur pour protéger la couche adhésive.

3. Ensemble d'articles selon la revendication 1, dans lequel les films optiques (15) transparents amovibles sont généralement rectangulaires ; de préférence, les films amovibles forment un périmètre continu comportant un bord (115) ; plus préférablement, une zone adjacente au bord et à la languette comporte une partie en bandes dans laquelle aucun adhésif n'est apposé à aucune des couches de film pour faciliter le retrait de la couche de film avec la languette.

4. Ensemble d'articles selon la revendication 1, dans lequel
- lesdits films optiques (15) transparents amovibles et lesdites couches adhésives (20) transparentes ont un indice de réfraction entre 1,40 et 1,52 ; ou
- lesdits films optiques (15) transparents amovibles sont réalisés en un polyester transparent.

5. Ensemble d'articles selon la revendication 1, dans lequel lesdits films optiques (15) transparents amovibles sont réalisés en un matériau résistant aux rayures ; de préférence, lesdits films amovibles sont réalisés en un matériau qui est inerte en présence d'acide.

6. Utilisation de l'ensemble d'articles selon la revendication 1 sur une surface d'un véhicule (90) ; de préférence sur une vitre sur le véhicule, ou sur une carrosserie du véhicule.

7. Utilisation de l'ensemble d'articles selon la revendication 1 sur une surface d'un écran d'affichage ; de préférence, l'écran d'affichage est un écran d'affichage pour un dispositif informatique (140), plus préférablement l'écran d'affichage est un écran d'affichage pour un dispositif informatique portable.

8. Utilisation de l'ensemble d'articles selon la revendication 1 sur une surface d'un écran de présentation.

9. Ensemble d'articles selon la revendication 1, dans lequel l'adhésif couvre une surface entière du film optique (15) transparent amovible.

10. Ensemble d'articles selon la revendication 1, dans lequel le film inférieur est tinté ou peut être apposé à la surface de l'objet et le film inférieur est réfléchissant.
